# EUROPÄISCHE PATENTANMELDUNG

(11) **EP 2 741 025 A1**
(43) Veröffentlichungstag der Anmeldung: **11.06.2014**
(21) Anmeldenummer: 13195753.2
(22) Anmeldetag: 04.12.2013
(51) Int. Cl.: F24J 2/32

(54) **Solarröhrenkollektor**

(30) Priorität: 05.12.2012 DE 102012111789
(71) Anmelder: Viessmann Werke GmbH & Co. Kg, 35108 Allendorf (DE)
(72) Erfinder: Sigurd, Wenzler, 35066 Frankenberg (DE); Francois, Griedlich, 57320 Alzing (FR)
(74) Vertreter: Wolf, Michael

(57) **Zusammenfassung**

Die Erfindung betrifft einen Solarröhrenkollektor, umfassend mehrere, nach dem Wärmerohr-Prinzip arbeitende Kollektorröhren (1), an deren einen Ende jeweils ein Kondensator (2) zum Kondensieren eines fluiden Wärmerohrmediums angeordnet ist, und einen Sammler (3), an dem die Kondensatoren (2) der Kollektorröhren (1) angeordnet sind und der zur Übernahme von mit den Kollektorröhren (1) aufgenommener Wärme ausgebildet ist. Nach der Erfindung ist vorgesehen, dass der Sammler (3) als metallischer Wärmetauscherblock mit ersten Kontaktbereichen (4) für die Kondensatoren (2) und mit einem zweiten Kontaktbereich (5) für eine von einem fluiden Solarkreismedium durchströmte Rohrleitung (6) ausgebildet ist.

## Beschreibung

Die Erfindung betrifft einen Solarröhrenkollektor gemäß dem Oberbegriff des Patentanspruchs 1.

Ein Solarröhrenkollektor der eingangs genannten Art ist nach der DE 20 2007 014 238 U1 bekannt. Dieser besteht aus mehreren, nach dem Wärmerohr-Prinzip arbeitenden Kollektorröhren, an deren einen Ende jeweils ein Kondensator zum Kondensieren eines fluiden Wärmerohrmediums angeordnet ist, und aus einem Sammler, an dem die Kondensatoren der Kollektorröhren angeordnet sind und der zur Übernahme von mit den Kollektorröhren aufgenommener Wärme ausgebildet ist.

Der Erfindung liegt die Aufgabe zugrunde, einen Solarröhrenkollektor der eingangs genannten Art zu verbessern. Insbesondere soll bei einem Solarröhrenkollektor der eingangs genannten Art die Anbindung der Kondensatoren an den Sammler unter Beibehaltung einer guten Wärmeübertragung vereinfacht werden.

Diese Aufgabe ist mit einem Solarröhrenkollektor der eingangs genannten Art durch die im Kennzeichen des Patentanspruchs 1 aufgeführten Merkmale gelöst.

Nach der Erfindung ist also vorgesehen, dass der Sammler als metallischer Wärmetauscherblock mit ersten Kontaktbereichen für die Kondensatoren und mit einem zweiten Kontaktbereich für eine von einem fluiden Solarkreismedium durchströmte Rohrleitung ausgebildet ist.

Mit anderen Worten zeichnet sich der erfindungsgemäße Solarröhrenkollektor dadurch aus, dass der Sammler nicht mehr selbst vom Solarkreismedium durchströmt wird, sondern als Wärmetauscherblock ausgebildet ist, den sowohl die Kondensatoren als auch die Rohrleitung an den jeweiligen Kontaktbereichen kontaktieren. Dabei wird von den Kollektorröhren aufgenommene Solarwärme zunächst in bekannter Weise durch Kondensation des Wärmerohrmediums am Kondensator freigesetzt. Diese Wärme wird auf den erfindungsgemäßen Wärmetauscherblock über die ersten Kontaktbereiche übertragen, so dass letztlich der gesamte Block erwärmt wird. Über den zweiten Kontaktbereich wird anschließend diese Wärme auf die Rohrleitung übertragen, die die Wärme ihrerseits auf das Solarkreismedium überträgt, das dann in bekannter Weise zum Beispiel im Solarkreis eines Gebäudes zirkuliert und zu Heizzwecken genutzt wird.

Vorteilhafte Weiterbildungen des erfindungsgemäßen Solarröhrenkollektors ergeben sich aus den abhängigen Patentansprüchen.

Der erfindungsgemäße Solarröhrenkollektor einschließlich seiner vorteilhaften Weiterbildungen gemäß der abhängigen Patentansprüche wird nachfolgend anhand der zeichnerischen Darstellung eines bevorzugten Ausführungsbeispiels näher erläutert.

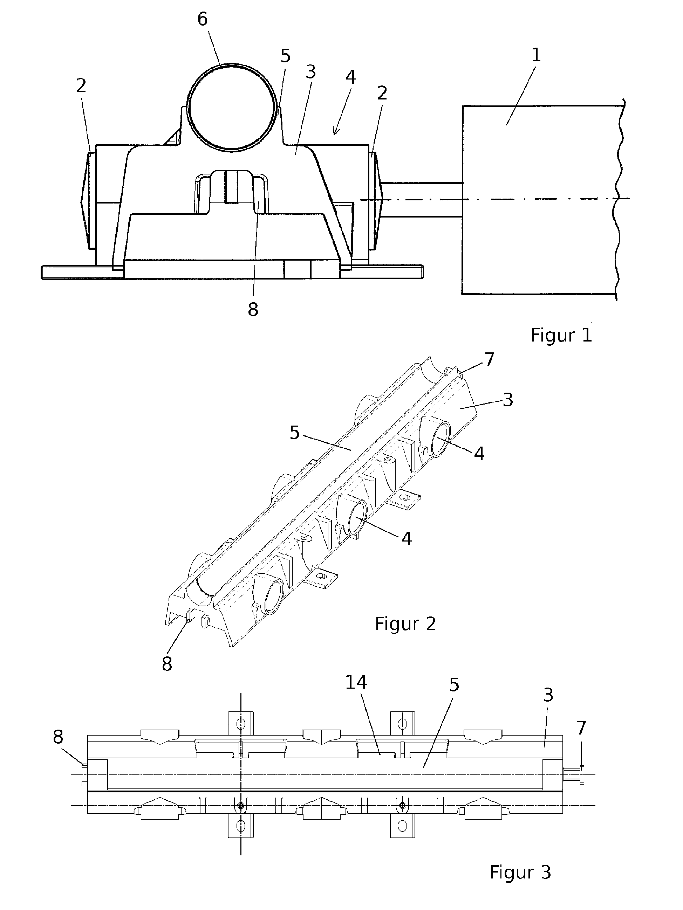

Es zeigt
- Figur 1: in Seitenansicht den erfindungsgemäßen Wärmetauscherblock mit Kondensator und Kollektorröhre sowie der vom Solarkreismedium durchströmten Rohrleitung;
- Figur 2: perspektivisch (von der den Kollektorröhren zugewandten Seite) den Wärmetauscherblock ohne Kollektorröhren und ohne Rohrleitung;
- Figur 3: in Draufsicht den Wärmetauscherblock ohne Kollektorröhre und ohne Rohrleitung;
- Figur 4: perspektivisch (von der den Kollektorröhren abgewandten Seite) den Wärmetauscherblock ohne Kollektorröhren und ohne Rohrleitung; und
- Figur 5: eine Explosionsdarstellung des erfindungsgemäßen Solarröhrenkollektors bzw. (Gesamt-) Wärmetauschers einschließlich Gehäuse mit insgesamt drei Wärmetauscherblöcken für insgesamt neun Kollektorröhren.

Der in den Figuren dargestellte Solarröhrenkollektor besteht aus mehreren, nach dem Wärmerohr-Prinzip, insbesondere Heat-Pipe-Prinzip, arbeitenden Kollektorröhren 1, an deren einen Ende jeweils ein vorzugsweise hauptsächlich aus Kupfermaterial gebildeter Kondensator 2 zum Kondensieren eines fluiden Wärmerohrmediums angeordnet ist, und aus einem Sammler 3, an dem die Kondensatoren 2 der Kollektorröhren 1 angeordnet sind und der zur Übernahme von mit den Kollektorröhren 1 aufgenommener Wärme ausgebildet ist.

Wesentlich für den erfindungsgemäßen Solarröhrenkollektor ist nun, dass der Sammler 3 als metallischer Wärmetauscherblock mit ersten Kontaktbereichen 4 für die Kondensatoren 2 und mit einem zweiten Kontaktbereich 5 für eine von einem fluiden Solarkreismedium durchströmte, insbesondere geradlinig verlaufende Rohrleitung 6 ausgebildet ist.

Bezüglich der verwendeten Materialien ist dabei vorgesehen, dass der Wärmetauscherblock aus Aluminium, vorzugsweise im Aluminium-Druckgussverfahren hergestellt, gebildet ist und dass die Rohrleitung 6 hauptsächlich aus Kupfer besteht.

Etwas genauer betrachtet, ist insbesondere vorgesehen, dass der Wärmetauscherblock mit dem ersten und dem zweiten Kontaktbereich 4, 5 insgesamt einstückig ausgebildet ist. Wie aus den Figuren ersichtlich, ist der Wärmetauscherblock weiterhin bevorzugt quaderförmig ausgebildet, wobei der erste Kontaktbereich 4 an mindestens einer Längsseite und der zweite Kontaktbereich 5 an einer Oberseite des quaderförmigen Wärmetauscherblocks angeordnet ist.

Ferner ist der Kondensator 2 zylindrisch und in den kondensatorzugewandt ebenfalls zylindrisch ausgebildeten ersten Kontaktbereich 4 passgenau einsteckbar ausgebildet. - Dies erklärt im übrigen die obige Maßgabe, nämlich dass der erste Kontaktbereich 4 an mindestens einer Längsseite angeordnet ist, und zwar insofern, als die Optionen bestehen, dass der zylindrisch ausgebildete Kontaktbereich 4 wahlweise als Durchgangsöffnung (dargestellt) oder als Sackloch (nicht dargestellt) am Wärmetauscherblock ausgebildet ist. In allen Fällen ist bevorzugt vorgesehen, dass der Kondensator 2 zur Gewährleistung einer guten Wärmeleitung vollflächig am ersten Kontaktbereich 4 anliegend ausgebildet ist.

Weiterhin ist vorgesehen, dass der zweite Kontaktbereich 5 rohrleitungszugewandt teilzylindrisch, vorzugsweise - wie dargestellt - halbzylindrisch, ausgebildet ist, wobei auch in diesem Fall vorgesehen ist, dass die Rohrleitung 6 zur Gewährleistung einer guten Wärmeleitung vollflächig am zweiten Kontaktbereich 5 anliegend ausgebildet ist.

Dabei gilt insgesamt die Maßgabe, dass der Kondensator 2 und die Rohrleitung 6 kontaktflächenfrei zueinander angeordnet sind, d. h. die beiden Bauteile berühren sich nicht direkt, sondern stehen zueinander nur über den Wärmetauscherblock in Verbindung, wobei weiterhin entsprechend vorgesehen ist, dass eine Hauptachse der Rohrleitung 6 mit Distanz zu einer Hauptachse des Kondensators 2 verlaufend angeordnet ist.

Wie weiterhin aus den Figuren ersichtlich, ist vorgesehen, dass eine Hauptachse des zylindrisch ausgebildeten ersten Kontaktbereichs 4 senkrecht bzw. rechtwinklig zu einer Hauptachse des teilzylindrisch ausgebildeten zweiten Kontaktbereichs 5 angeordnet ist, d. h. die Rohrleitung 6 verläuft quer über die Kondensatoren 2 hinweg (ohne diese - wie erläutert - direkt zu berühren).

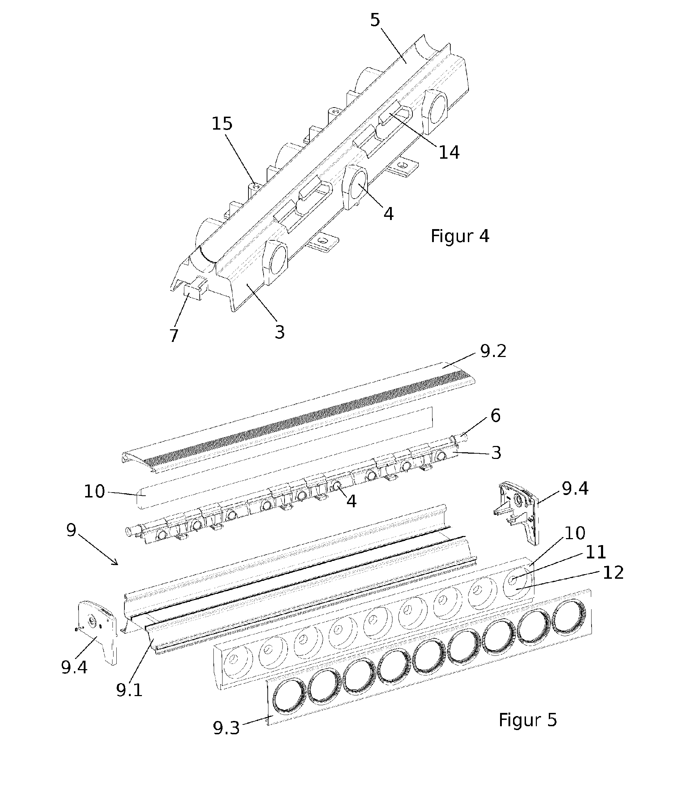

Ferner ist besonders bevorzugt vorgesehen, dass am Wärmetauscherblock mindestens zwei, vorzugsweise - wie dargestellt - drei, erste Kontaktbereiche 4 vorgesehen sind. Pro Wärmetauscherblock lassen sich damit drei Kollektorröhren 1 anbinden, wobei weiterhin zur Ausbildung eines größeren Solarröhrenkollektors mehrere Wärmetauscherblöcke in Hauptachsrichtung der Rohrleitung 6 gesehen hintereinander angeordnet sind. Figur 5 zeigt einen solchen insgesamt drei Wärmetauscherblöcken umfassenden Solarröhrenkollektor für insgesamt neun Kollektorröhren 1 (nicht dargestellt).

Um die Wärmetauscherblöcke miteinander zu verbinden, ist dabei ferner bevorzugt vorgesehen, dass jeder Wärmetauscherblock an einem Ende mit einem ersten Kupplungselement 7 und am anderen Ende mit einem zweiten, vorzugsweise formschlüssig zum ersten passenden Kupplungselement 8 versehen ist. Dabei sind vorzugsweise bei Aneinanderreihung mehrerer Wärmetauscherblöcke zur Unterdrückung einer Wärmeleitung zwischen den Blöcken die Kupplungselemente 7, 8 einen Spalt zwischen den Wärmetauscherblöcken definierend ausgebildet - siehe hierzu Figur 5.

In diesem Kontext ist weiterhin bevorzugt vorgesehen, dass die Kupplungselemente 7, 8 in Kupplungsposition in einer ersten Raumrichtung (axial-) verschieblich und in einer zweiten und dritten Raumrichtung unverschieblich zueinander ausgebildet sind, wobei die erste Raumrichtung quer zur Hauptachse des Kondensators 2 und quer zur Hauptachse der Rohrleitung 6 orientiert ausgebildet ist.

Wie weiterhin aus Figur 5 ersichtlich, ist vorgesehen, dass der Wärmetauscherblock in einem Gehäuse 9 angeordnet ist. Dieses umfasst ein Gehäuseunterteil 9.1, einen Gehäusedeckel 9.2, ein Kollektorröhreneinsteckteil 9.3 und zwei Seitenteile 9.4. Weiterhin ist vorgesehen, dass das Gehäuseunterteil 9.1 und der Gehäusedeckel 9.2 als Strangpressprofilteile, vorzugsweise aus Aluminium, ausgebildet sind, wobei ferner im Gehäuse 9 mindestens ein Wärmedämmelement 10 angeordnet ist. In Figur 5 sind zwei solcher Wärmedämmelemente 10 dargestellt, wobei das eine, das benachbart zum Kollektorröhreneinsteckteil 9.3 angeordnet ist, mit einer Durchgangsöffnung 11 für den Kondensator 2 und einer vorzugsweise topfförmigen Vertiefung 12 zur Aufnahme des kondensatorseitigen Endes der Kollektorröhre 1 ausgebildet ist, wobei weiterhin die Durchgangsöffnung 11 in der Vertiefung 12 angeordnet ist.

Wie weiterhin aus Figur 5 ersichtlich, ist vorgesehen, dass die Rohrleitung 6 mit mindestens einem die Rohrleitung 6 formangepasst übergreifenden Halteelement 13 am Wärmetauscherblock fixiert ausgebildet ist. Schließlich ist am Wärmetauscherblock ein Vorsprung 14 als förmschlüssiges Widerlager für das Halteelement 13 und eine Gewindebohrung 15 für eine das Halteelement 13 am Wärmetauscherblock fixierende Schraube vorgesehen.

### Bezugszeichenliste

- 1: Kollektorröhre
- 2: Kondensator
- 3: Sammler
- 4: Kontaktbereich
- 5: Kontaktbereich
- 6: Rohrleitung
- 7: erstes Kupplungselement
- 8: zweites Kupplungselement
- 9: Gehäuse
- 9.1: Gehäuseunterteil
- 9.2: Gehäusedeckel
- 9.3: Kollektorröhreneinsteckteil
- 9.4: Seitenteil
- 10: Wärmedämmelement
- 11: Durchgangsöffnung
- 12: Vertiefung
- 13: Halteelement
- 14: Vorsprung
- 15: Gewindebohrung

## Patentansprüche

1. Solarröhrenkollektor, umfassend mehrere, nach dem Wärmerohr-Prinzip arbeitende Kollektorröhren (1), an deren einen Ende jeweils ein Kondensator (2) zum Kondensieren eines fluiden Wärmerohrmediums angeordnet ist, und einen Sammler (3), an dem die Kondensatoren (2) der Kollektorröhren (1) angeordnet sind und der zur Übernahme von mit den Kollektorröhren (1) aufgenommener Wärme ausgebildet ist,
**dadurch gekennzeichnet,**
**dass** der Sammler (3) als metallischer Wärmetauscherblock mit ersten Kontaktbereichen (4) für die Kondensatoren (2) und mit einem zweiten Kontaktbereich (5) für eine von einem fluiden Solarkreismedium durchströmte Rohrleitung (6) ausgebildet ist.

2. Solarröhrenkollektor nach Anspruch 1,
**dadurch gekennzeichnet,**
**dass** der Wärmetauscherblock mit dem ersten und dem zweiten Kontaktbereich (4, 5) insgesamt einstückig ausgebildet ist.

3. Solarröhrenkollektor nach Anspruch 1 oder 2,
**dadurch gekennzeichnet,**
**dass** der Kondensator (2) zylindrisch und in den kondensatorzugewandt ebenfalls zylindrisch ausgebildeten ersten Kontaktbereich (4) passgenau einsteckbar ausgebildet ist.

4. Solarröhrenkollektor nach einem der Ansprüche 1 bis 3,
**dadurch gekennzeichnet,**
**dass** der zweite Kontaktbereich (5) rohrleitungszugewandt teilzylindrisch, vorzugsweise halbzylindrisch, ausgebildet ist.

5. Solarröhrenkollektor nach Anspruch 3 und 4,
**dadurch gekennzeichnet,**
**dass** eine Hauptachse des zylindrisch ausgebildeten ersten Kontaktbereichs (4) senkrecht zu einer Hauptachse des teilzylindrisch ausgebildeten zweiten Kontaktbereichs (5) angeordnet ist.

6. Solarröhrenkollektor nach einem der Ansprüche 1 bis 5,
**dadurch gekennzeichnet,**
**dass** am Wärmetauscherblock mindestens zwei erste Kontaktbereiche (4) vorgesehen sind.

7. Solarröhrenkollektor nach einem der Ansprüche 1 bis 6,
**dadurch gekennzeichnet,**
**dass** eine Hauptachse der Rohrleitung (6) mit Distanz zu einer Hauptachse des Kondensators (2) verlaufend angeordnet ist.

8. Solarröhrenkollektor nach einem der Ansprüche 1 bis 7,
**dadurch gekennzeichnet,**
**dass** mehrere Wärmetauscherblöcke in Hauptachsrichtung der Rohrleitung (6) gesehen hintereinander angeordnet sind.

9. Solarröhrenkollektor nach einem der Ansprüche 1 bis 8,
**dadurch gekennzeichnet,**
**dass** der Wärmetauscherblock quaderförmig ausgebildet ist.

10. Solarröhrenkollektor nach Anspruch 9,
**dadurch gekennzeichnet,**
**dass** der erste Kontaktbereich (4) an mindestens einer Längsseite und der zweite Kontaktbereich (5) an einer Oberseite des quaderförmigen Wärmetauscherblocks angeordnet ist.

11. Solarröhrenkollektor nach einem der Ansprüche 1 bis 10,
**dadurch gekennzeichnet,**
**dass** jeder Wärmetauscherblock an einem Ende mit einem ersten Kupplungselement (7) und am anderen Ende mit einem zweiten Kupplungselement (8) versehen ist.

12. Solarröhrenkollektor nach Anspruch 11,
**dadurch gekennzeichnet,**
**dass** das erste Kupplungselement (7) formschlüssig passend zum zweiten Kupplungselement (8) ausgebildet ist.

13. Solarröhrenkollektor nach Anspruch 11 oder 12,
**dadurch gekennzeichnet,**
**dass** bei Aneinanderreihung mehrerer Wärmetauscherblöcke zur Unterdrückung einer Wärmeleitung zwischen den Wärmetauscherblöcken die Kupplungselemente (7, 8) einen Spalt zwischen den Wärmetauscherblöcken definierend ausgebildet sind.

14. Solarröhrenkollektor nach einem der Ansprüche 11 bis 13,
**dadurch gekennzeichnet,**
**dass** die Kupplungselemente (7, 8) in Kupplungsposition in einer ersten Raumrichtung verschieblich und in einer zweiten und dritten Raumrichtung unverschieblich zueinander ausgebildet sind.

15. Solarröhrenkollektor nach Anspruch 14,
**dadurch gekennzeichnet,**
**dass** die erste Raumrichtung quer zur Hauptachse des Kondensators (2) und quer zur Hauptachse der Rohrleitung (6) orientiert ausgebildet ist.
